# EUROPEAN PATENT APPLICATION

(11) **EP 2 001 211 A1**
(43) Date of publication of application: **10.12.2008**
(21) Application number: 07846152.2
(22) Date of filing: 26.12.2007
(51) Int. Cl.: H04M 3/42, H04M 1/66

(54) **METHOD AND INTELLIGENT TELEPHONE TERMINAL FOR REALIZING DO NOT DISTURB SERVICE**

(30) Priority: 28.12.2006 CN 200610156604
(71) Applicant: Huawei Technologies Co., Ltd., Shenzhen, Guangdong Province 518129 (CN)
(72) Inventor: MA, Zhangping, Shenzhen Guangdong 518129 (CN)
(74) Representative: Pfenning, Meinig & Partner GbR
(86) International application number: PCT/CN2007/071326
(87) International publication number: WO 2008/083583

(57) **Abstract**

A method for implementing a do-not-disturb service includes: determining, by an intelligent phone terminal, whether to initiate a do-not-disturb service for an incoming call upon detection of the incoming call, the intelligent phone terminal being a fixed phone terminal or a PC software phone terminal provided with human-machine interfaces and capable of processing automatically a call in accordance with a user preset rule; and reading, by the intelligent phone terminal, a do-not-disturb prompt tone file and playing it to the caller of the incoming call if it is determined to initiate a do-not-disturb service. An intelligent phone terminal implements a do-not-disturb service function on an intelligent phone.

## Description

This application claims the priority of a Chinese patent application No. 200610156604.0, entitled "Intelligent phone terminal and method for providing do-not-disturb service for the same" and filed with the Chinese Patent Office on December 28, 2006, which is hereby incorporated by reference in its entirety.

### FIELD OF THE INVENTION

The present invention relates to the field of communication and in particular to a method for implementing a do-not-disturb service and an intelligent phone terminal.

### BACKGROUND OF THE INVENTION

An intelligent phone terminal refers to a terminal device for phone communication and this device is provided with abundant human-machine interfaces and may process automatically a call in accordance with a user preset rule. The intelligent phone terminal may be a fixed phone terminal, a PC software phone terminal, etc.

The do-not-disturb service means, a communication system rejects automatically an incoming call when people have a rest, make a conference etc., so that the people can not be disturbed by the call. An extended do-not-disturb service may also include functions of "blacklist" and "VIP list". The communication system rejects automatically an incoming call from the "blacklist" but not reject automatically a call from the "VIP list" regardless of whether it is in a do-not-disturb period.

Currently popular implementations of the do-not-disturb function are as follows.

(1) Incoming calls are filtered on a switch (or a gateway)

Upon reception of a call request, the switch (or the gateway) determines whether the callee currently registers a do-not-disturb service, and rejects automatically the incoming call without connecting the call request to the callee if the callee registers the do-not-disturb service.

(2) Incoming calls are filtered on a mobile terminal

The mobile terminal is highly intelligent and is provided with abundant human-machine interfaces, thus capable of providing the do-not-disturb service. Upon reception of a call request, the mobile terminal firstly determines whether it is necessary to initiate the do-not-disturb service and rejects automatically the incoming call if necessary.

Currently, fixed phone terminals are increasingly intelligent, and applications of PC software phone terminals are promoted gradually. The do-not-disturb function may be implemented on mobile phone terminals, fixed phone terminals and PC software phone terminals.

A do-not-disturb service is registered/deregistered for a phone terminal on a switch (or a gateway), and it is determined by the switch (or the gateway) whether to activate the do-not-disturb service and to reject an incoming call. The process of registering/deregistering the do-not-disturb service is activated from the phone terminal using a private protocol. Upon reception of a call request from a caller, the switch (or the gateway) firstly determines whether the callee registers the do-not-disturb service (or whether it is in a do-not-disturb period at present), and if the callee registers the do-not-disturb service, it rejects connecting to the callee and sends a do-not-disturb prompt tone to the caller; otherwise it connects normally to the callee.

*The First Method:*

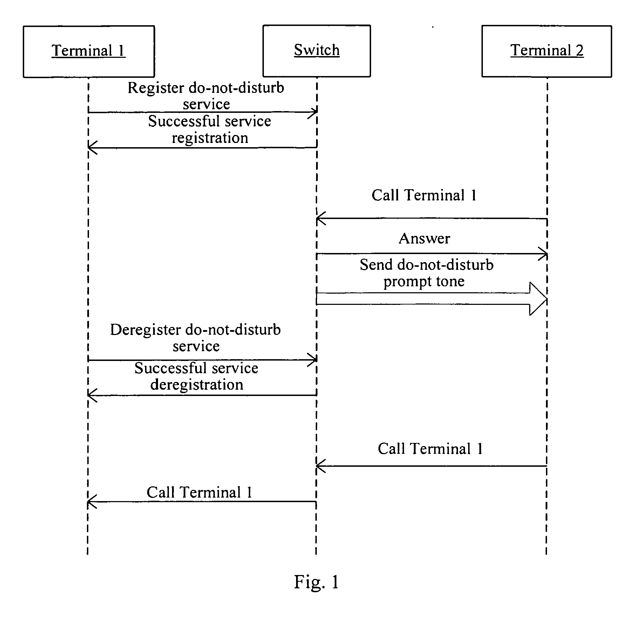

Figure 1 is a flow chart of processing a call according to the first method in related arts. As illustrated in Figure 1, the method includes the following steps.

(1) A terminal 1 registers with a switch for a do-not-disturb service through a private protocol;

(2) A terminal 2 initiates a call to the terminal 1 which acts as a callee;

(3) When call signaling arrives at the switch, the switch determines that the callee (the terminal 1) registers the do-not-disturb service, then does not connect the call to the callee and responds directly to the caller (the terminal 2) by sending thereto a do-not-disturb prompt tone;

(4) The terminal 1 deregisters the do-not-disturb service from the switch through the private protocol;

(5) The terminal 2 initiates a call again to the terminal 1 which still acts as a callee; and

(6) When call signaling arrives at the switch, the switch determines that the callee (the terminal 1) does not register the do-not-disturb service, and then connects normally the call to the terminal 1.

However, the above method has the following drawbacks: the do-not-disturb service is implemented on a switch or a gateway, the terminal has to register the do-not-disturb service through the private protocol, and the compatibility between the terminal and the switch (or the gateway) is not good; service configuration is not flexible since it is difficult to determine whether to initiate the do-not-disturb service in accordance with a combination of multiple conditions such as a blacklist, a VIP list, a do-not-disturb period, etc. and it is difficult for the terminal to look into a call which is missed due to the initiated do-not-disturb service so as to call back.

*The Second Method:*

Currently, a mobile phone terminal is highly intelligent, and is provided with abundant human-machine interfaces, thus, a do-not-disturb function may be implemented on a mobile phone terminal, and a blacklist, a VIP list, periods in a normal status and a rest status may be set on the mobile phone terminal.

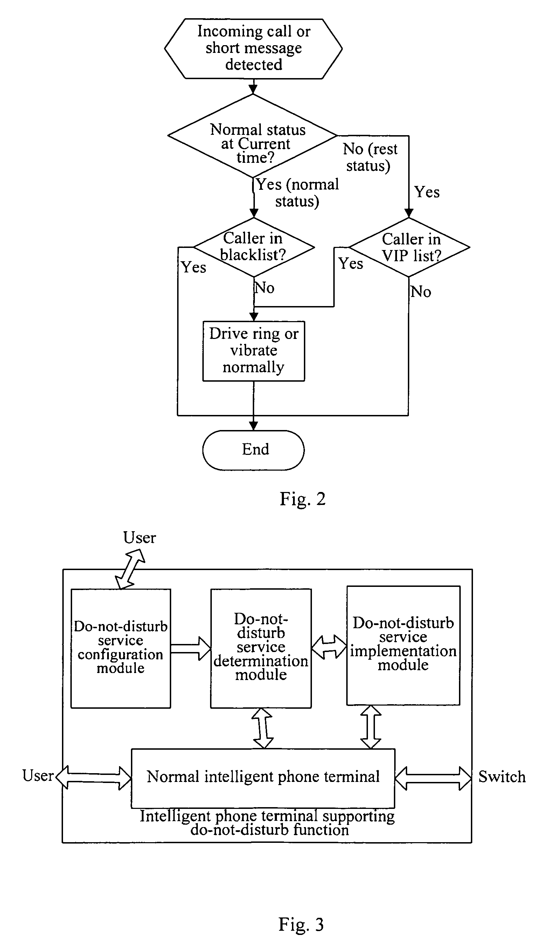

Figure 2 is a flow chart of processing an incoming call event by a mobile phone terminal in the second method of related arts. As illustrated in Figure 2, the flow in which the mobile phone terminal processes an incoming call event includes the following steps.

(1) The mobile phone terminal detects an incoming call or a short message;

(2) It is determined whether the mobile phone terminal is currently in a normal status or a rest status;

(3) If in a normal status, the terminal determines whether the calling number is in its blacklist, and if the calling number is in its blacklist, the terminal does not accept the signal of the incoming call or short message; otherwise, the terminal drives a ring or vibrates normally; and

(4) If in a rest status, the terminal determines whether the calling number is in its VIP list, and if the calling number is in its VIP list, the terminal drives a ring or vibrates normally; otherwise, the terminal does not accept the signal of the incoming call or short message.

However, the method has the following drawbacks:

It is only applied to a mobile phone terminal, thus has a very narrow scope of applications; and it does not support playing a do-not-disturb prompt tone for a caller, thus is not friendly enough.

### SUMMARY OF THE INVENTION

Embodiments of the invention are intended to provide a method for implementing a do-not-disturb service and an intelligent phone terminal to implement a do-not-disturb service function on an intelligent phone.

An embodiment of the invention provides a method for implementing a do-not-disturb service including the steps of:
determining, by an intelligent phone terminal, whether to initiate the do-not-disturb service for an incoming call upon detection of the incoming call, the intelligent phone terminal being a fixed phone terminal or a PC software phone terminal provided with a human-machine interface and capable of processing automatically a call in accordance with a user preset rule; and
reading, by the intelligent phone terminal, a do-not-disturb prompt tone file and playing it to the caller of the incoming call if it is determined to initiate the do-not-disturb service.

An embodiment of the invention also provides an intelligent phone terminal including:
a do-not-disturb service determination module adapted to determine whether to initiate a do-not-disturb service for an incoming call when the intelligent phone terminal detects the incoming call; and
a do-not-disturb service module adapted to instruct the intelligent phone terminal to read a do-not-disturb prompt tone file and play it to the caller of the incoming call if the do-not-disturb service determination module determines to initiate a do-not-disturb service.

With the above technical solutions, the embodiments of the invention achieve the following technical effects.

In the second method of the Background of the Invention, the mobile phone terminal does not accept the signal of the incoming call, and the caller hearing a busy tone may consider that the mobile phone terminal is busy and thus will call repeatedly the user of the mobile phone terminal. Provision of the error information on the user status of the mobile phone terminal to the caller may result in a waste of time and resources of the caller. With the method for implementing a do-not disturb service and the intelligent phone terminal according to the embodiments of the invention, the intelligent phone terminal determines to initiate the do-not disturb service for the incoming call, and then plays a do-not-disturb prompt tone to the caller, so that the caller may know that the user of the intelligent phone terminal does not wish to be disturbed and then will contact the user of the intelligent phone terminal at other appropriate time. This may not only ensure that the user of the intelligent phone terminal is not disturbed when necessary so as to meet the personalized requirement of the user, but also ensure the efficiency of the caller for contacting the user of the intelligent phone terminal.

### BRIEF DESCRIPTION OF THE DRAWINGS

Figure 1 illustrates a flow chart of processing a call according to the first method in related arts;

Figure 2 illustrates a flow chart of processing an incoming call event by a mobile phone terminal in the second method of related arts;

Figure 3 illustrates a schematic diagram of a software structure of an intelligent terminal according to an embodiment of the invention;

Figure 4 illustrates a flow chart of a do-not-disturb service according to an embodiment of the invention;

Figure 5 illustrates a flow chart of a method for providing an intelligent phone terminal with a do-not-disturb service according to an embodiment of the invention; and

Figure 6 illustrates a block diagram of an intelligent phone terminal according to an embodiment of the invention.

### DETAILED DESCRIPTION OF THE INVENTION

The invention is described in detail hereinafter by reference to the drawings and embodiments.

Figure 3 illustrates a schematic diagram of a software structure of an intelligent terminal according to an embodiment of the invention. This intelligent phone terminal is a fixed phone terminal or a PC software phone terminal provided with human-machine interfaces and capable of processing automatically a call in accordance with a user preset rule.

As illustrated in Figure 3, a do-not-disturb service related module is added on a normal intelligent phone terminal so as to implement a do-not-disturb service function, and the do-not-disturb service related module includes a do-not-disturb service configuration module, a do-not-disturb service determination module and a do-not-disturb service implementation module.

Functions and interfaces of the respective modules are described below.

The normal intelligent phone terminal is provided with call-in and call-out functions and it may be a mobile phone terminal, an intelligent fixed phone terminal or a PC software phone terminal. The terminal automatically invokes the do-not-disturb service determination module upon detection of an incoming call.

The do-not-disturb service configuration module may be configured by a user with a blacklist, a VIP list and a do-not-disturb period and provide the do-not-disturb service determination module with an interface (the interface is used for determining whether a number is in the blacklist or the VIP list or whether the current time is in the do-not-disturb period).

The do-not-disturb service determination module determines whether it is necessary to initiate the do-not-disturb service for an incoming call upon reception of the incoming call. If not necessary, the terminal processes the call as in a normal flow; and if necessary, the terminal invokes the do-not-disturb implementation module to implement the do-not-disturb service.

The do-not-disturb service implementation module implements the do-not-disturb service through invoking an answer interface, a tone play (play a do-not-disturb prompt tone to a caller) interface and a log interface of the phone terminal.

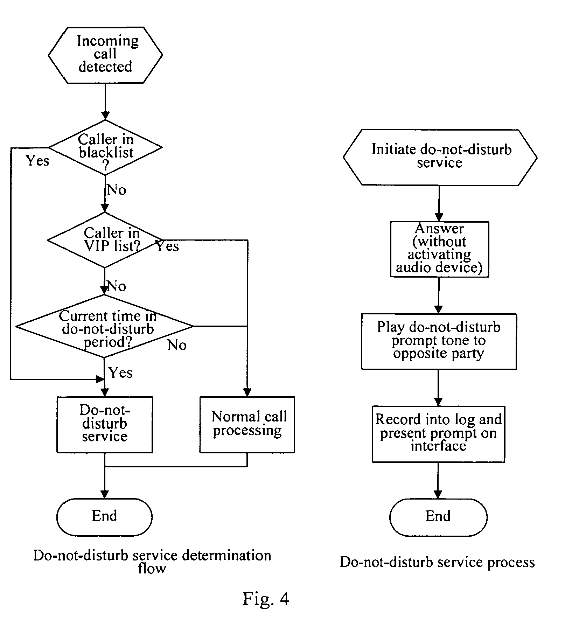

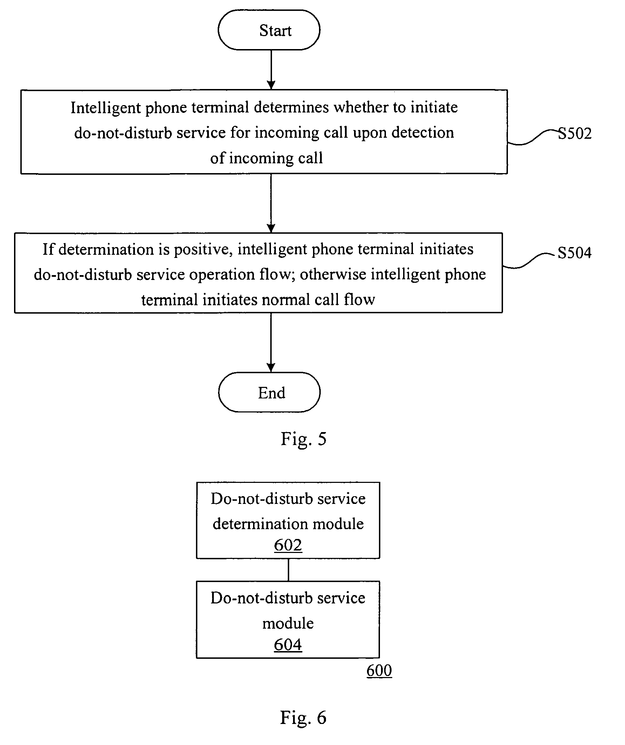

A method for implementing a do-not-disturb service according to the invention will be described in details below with reference to Figure 4 and Figure 5. Figure 4 illustrates a flow chart of a do-not-disturb service according to an embodiment of the invention, and Figure 5 illustrates a flow chart of a method for providing an intelligent phone terminal with a do-not-disturb service according to an embodiment of the invention.

As illustrated in Figure 5, the method for providing an intelligent phone terminal with a do-not-disturb service includes the following steps. At Step S502, the intelligent phone terminal determines whether to activate the do-not-disturb service for an incoming call upon detection of the incoming call; and at step S504, if it is determined to activate the do-not-disturb service, the intelligent phone terminal initiates a do-not-disturb service operation flow. Optionally, if it is determined not to activate the do-not-disturb service, the intelligent phone terminal initiates a normal call flow.

Please refer to Figure 4 for the specific operation steps. As illustrated in Figure 4, a do-not-disturb service determination process includes the following steps:

(1) The terminal detects an incoming call and initiates a do-not-disturb service determination flow;

(2) It is determined whether the calling number is in a blacklist of the intelligent phone terminal, and if yes, the terminal initiates the do-not-disturb service; otherwise the flow goes to the step (3);

(3) It is determined whether the calling number is in a VIP list, and if yes, the terminal processes the call as in a normal flow; otherwise the flow goes to the step (4); and

(4) It is determined whether the current time is in a preset do-not-disturb period, and if yes, the terminal initiates the do-not-disturb service; otherwise the terminal processes the call as in the normal flow.

In particular, the process of the do-not-disturb service includes the following steps:

(1) The terminal detects an incoming call and determines that it is necessary to initiate the do-not-disturb service;

(2) The terminal answers automatically the incoming call but does not activating an audio input/output device;

(3) The terminal reads a do-not-disturb prompt tone file and plays it to the caller; and

(4) The terminal writes the do-not-disturb event into a log (including the time, the calling number, etc.) and presents a prompt on the interface of the terminal.

Figure 6 illustrates a block diagram of an intelligent phone terminal 600 according to an embodiment of the invention.

As illustrated in Figure 6, the intelligent phone terminal 600 includes a do-not-disturb service determination module 602 adapted to determine whether to initiate a do-not-disturb service for an incoming call when the intelligent phone terminal detects the incoming call, and a do-not-disturb service module 604 adapted to instruct the intelligent phone terminal to provide the do-not-disturb service for the incoming call if the do-not-disturb service determination module determines to initiate a do-not-disturb service.

As can be seen from the above descriptions, the embodiments of the invention achieves the following technical effects:

(1) The do-not-disturb service is implemented on the terminal and requires no special support from any switch or gateway, which results in good compatibility; (2) The do-not disturb service may be used flexibly in that a blacklist, a VIP list and a do-not-disturb period may be set and it may be determined whether to initiate the do-not-disturb service in accordance with a combination of those conditions; (3) When the do-not-disturb service is initiated, the caller may hear a do-not-disturb prompt tone, which shows a friendly use of the service; (4) A do-not-disturb service log is provided for a convenient call-back; and (5) A uniform method may be applied to various intelligent phone terminals but not limited only to mobile phones.

Evidently, those skilled in the art shall appreciate that the respective modules or steps of the invention may be implemented by a general-purpose computing device and may be integrated on a single computing device or distributed over a network consisted of a plurality of computing devices. Optionally, they may be implemented using program codes executable by the computing device so that they may be stored in a storage device for execution by the computing device or they may be implemented by fabricating them into respective integrated circuit modules respectively or by fabricating some modules or steps of them into a single integrated circuit module. Thus, the invention is not limited to any specific combination of hardware and software. It shall be appreciated that variations of these specific implementations will be obvious to those skilled in the art without departing from the spirit and scope of the invention.

The foregoing descriptions are merely illustrative of the preferred embodiments of the invention but not intended to limit the scope of the invention, and various modifications and variations which may be made to the invention will occur to those skilled in the art. Any modifications, equivalent alternatives and adaptations in light of the spirit and principle of the invention shall fall within the scope of the invention.

## Claims

1. A method for implementing a do-not-disturb service, comprising:
determining, by an intelligent phone terminal, whether to initiate a do-not-disturb service for an incoming call upon detection of the incoming call, the intelligent phone terminal being a fixed phone terminal or a PC software phone terminal provided with a human-machine interface and capable of processing automatically a call in accordance with a user preset rule; and
reading, by the intelligent phone terminal, a do-not-disturb prompt tone file and playing it to a caller of the incoming call if it is determined to initiate a do-not-disturb service for the incoming call upon detection of the incoming call.

2. The method according to claim 1, further comprising: answering, by the intelligent phone terminal, the incoming call automatically without activating an audio input/output device.

3. The method according to claim 1, wherein the determining, by the intelligent phone terminal, whether to initiate the do-not-disturb service for the incoming call comprises:
determining, by the intelligent phone terminal, whether the calling number of the incoming call is in a blacklist, and if the calling number of the incoming call is in a blacklist, initiating, by the intelligent phone terminal, the do-not-disturb service.

4. The method according to claim 3, wherein the blacklist is stored in advance in a memory of the intelligent phone terminal.

5. The method according to claim 1, wherein the determining, by the intelligent phone terminal, whether to initiate the do-not-disturb service for the incoming call comprises:
determining, by the intelligent phone terminal, whether the calling number of the incoming call is in a Very Important Person list, and if the calling number of the incoming call is in a Very Important Person list, initiating, by the intelligent phone terminal, a normal call processing.

6. The method according to claim 5, wherein the Very Important Person list is stored in advance in a memory of the intelligent phone terminal.

7. The method according to claim 1, wherein the determining, by the intelligent phone terminal, whether to initiate the do-not-disturb service for the incoming call comprises:
determining, by the intelligent phone terminal, whether the current time is in a do-not-disturb period, and if the current time is in a do-not-disturb period, initiating, by the intelligent phone terminal, the do-not-disturb service.

8. The method according to claim 7, wherein the do-not-disturb period is stored in advance in a memory of the intelligent phone terminal.

9. The method according to claim 1, further comprising: writing, by the intelligent phone terminal, a do-not-disturb event into a log.

10. The method according to claim 1, further comprising: presenting, by the intelligent phone terminal, a prompt of a do-not-disturb event on an interface of the intelligent phone terminal.

11. An intelligent phone terminal, comprising:
a do-not-disturb service determination module adapted to determine whether to initiate a do-not-disturb service for an incoming call when the intelligent phone terminal detects the incoming call; and
a do-not-disturb service module adapted to instruct the intelligent phone terminal to read a do-not-disturb prompt tone file and play it to a caller of the incoming call if the do-not-disturb service determination module determines to initiate a do-not-disturb service for the incoming call when the intelligent phone terminal detects the incoming call.

12. The method according to claim 11, further comprising a module adapted to answer automatically the incoming call without activating an audio input/output device.

13. The method according to claim 11, further comprising a module adapted to write a do-not-disturb event into a log.

14. The method according to claim 11, further comprising a module adapted to present a prompt of a do-not-disturb event on an interface of the intelligent phone terminal.
